# EUROPÄISCHE PATENTSCHRIFT

(11) **EP 0 470 362 B1**
(45) Veröffentlichungstag und Bekanntmachung des Hinweises auf die Patenterteilung: **12.04.1995**
(21) Anmeldenummer: 91110908.0
(22) Anmeldetag: 02.07.1991
(51) Int. Cl.: B65H 1/30, B65H 31/30, B65G 60/00

(54) **Bogen verarbeitende Maschine und damit zusammenarbeitende Transporteinrichtung für Bogenstapel**
Sheet-processing machine and device, working together with this machine, for conveying piles of sheets
Machine pour traiter des feuilles et dispositif, associé à cette machine, pour transporter des piles de feuilles

(30) Priorität: 27.07.1990 DE 4023877
(43) Veröffentlichungstag der Anmeldung: 12.02.1992
(73) Patentinhaber: Heidelberger Druckmaschinen Aktiengesellschaft, D-69019 Heidelberg (DE)
(72) Erfinder: Zahn, Erich, Dr., W-6073 Egelsbach (DE)
(74) Vertreter: Stoltenberg, Heinz-Herbert Baldo

(56) Entgegenhaltungen:
- DE-A- 2 736 832
- GB-A- 2 207 907

## Beschreibung

In der Praxis ist die Versorgung einer Bogen verarbeitenden Maschine mit Bogenstapeln und der Abtransport von Bogenstapeln von der Maschine noch überwiegend mit Verrichtungen verbunden, die beispielsweise bei einer Bogendruckmaschine ausgerechnet dort vorgenommen werden müssen, wo ein Drucker eigentlich einen ungehinderten Zugang zur Maschine haben sollte, nämlich in Durchlaufrichtung der Bogen durch die Maschine gesehen vor einem Anleger und hinter einem Ausleger. Andererseits ist es aus druckschriftlichen Veröffentlichungen bekannt, einem Anleger einen Bogenstapel von einer zum Anleger seitlichen Position aus zuzuführen. Eine hierzu geeignete Einrichtung ist beispielsweise aus der DE-C-35 04 491 ersichtlich. Hierbei ist beiderseits des Anlegers jeweils ein zur Durchlaufrichtung, in der die Bogen ein anschließendes Druckwerk einer Bogendruckmaschine durchlaufen, quer verlegtes Schienenpaar vorgesehen. Der Anleger umfaßt eine bis auf ein oberes Niveau anhebbare und bis auf ein unteres Niveau absenkbare Tragvorrichtung in Form einer an Hubketten waagrecht aufgehängten Hubplatte. In einer auf das untere Niveau abgesenkten Lage der Hubplatte fluchten die vorgenannten Schienenpaare mit einem auf der Hubplatte vorgesehenen Schienenpaar. Als Stapelunterlage ist eine Art Pritschenwagen vorgesehen, der mittels eines damit zusammenwirkenden Kettentriebs und eines den Kettentrieb betätigenden Antriebsmotors auf einem von den Schienenpaaren gebildeten Gleis verfahrbar ist. Obwohl damit Zwangsführungsmittel in Form des genannten Gleises vorgesehen sind, bedarf eine Beschickung des Anlegers mit einem Bogenstapel in einer maschinengerechten Ausrichtung jedoch zumindest noch einer entsprechenden Ausrichtung des Bogenstapels gegenüber dem Pritschenwagen. Hierzu ist nun bei der bekannten Einrichtung wenigstens einem der seitlich des Anlegers verlegten Schienenpaare eine Vorstapeleinrichtung zugeordnet, die es ermöglicht, auf einem in deren Bereich gefahrenen Pritschenwagen einen Bogenstapel unter maschinengerechter Ausrichtung desselben aufzubauen. Ein derartiges Vorstapeln erfolgt manuell und bedingt somit nicht unbeachtliche Lohnkosten. Diese fallen um so mehr ins Gewicht, je höher der Bogendurchsatz einer Druckmaschine und je größer damit der Bedarf eines entsprechenden Anlegers an vorgestapelten Bogenstapeln ist. Rein technologisch kann einem Bogendurchsatz bis zu einer gewissen Höhe zwar durch beidseits des Anlegers angeordnete Vorstapeleinrichtungen wie bei der bekannten Einrichtung vorgesehen nachgekommen werden, der Vorteil der automatisierten Beschickung des Anlegers mit Bogenstapeln in maschinengerechter Ausrichtung muß bei der bekannten Einrichtung jedoch gerade bei dem üblicherweise hohen Bogendurchsatz moderner Bogendruckmaschinen mit erheblichem körperlichen Einsatz einer Bedienungsperson und Lohnkosten erkauft werden.

Zur Schonung der einem an den Anleger anschließenden Druckwerk zugewandten Vorderkanten von zu einem Bogenstapel aufgeschichteten Bogen sind in der Vorstapeleinrichtung vorgesehene Frontanschläge für die genannten Vorderkanten gegenüber entsprechenden Frontanschlägen des Anlegers versetzt angeordnet. Damit weist ein im Bereich der Vorstapeleinrichtung auf einem Pritschenwagen vorgestapelter Bogenstapel nach dessen Transport mittels Transportmitteln in Form von Pritschenwagen, diesen führendem Gleis und diesen verschiebendem Kettentrieb zwar eine maschinengerechte Ausrichtung aber noch immer keine maschinengerechte Lage auf. Bei maschinengerechter Lage des Bogenstapels müßten nämlich die genannten Vorderkanten der Bogen auch an den am Anleger vorgesehenen Frontanschlägen anliegen. Dieser Zustand wird bei der bekannten Einrichtung infolge der genannten Versetzung der Frontanschläge jedoch nicht erreicht.

Bei einer anderen bekannten Einrichtung (DE-C-11 44 742) wird nach einer vorausgegangenen maschinengerechten Ausrichtung eines Bogenstapels auf einer Tragvorrichtung die Anlage der genannten Vorderkanten an entsprechenden Frontanschlägen des Anlegers während des Anhebens der Tragvorrichtung selbsttätig erreicht. Eine hierzu in Richtung auf die Frontanschläge des Anlegers hin gerichtete Verschiebung des Bogenstapels wird hierbei durch eine derartige Aufhängung der Tragvorrichtung mittels Seilen erreicht, daß die Seite in einer auf ein unteres Niveau abgesenkten auf einem Maschinenfundament aufsitzenden Lage der Tragvorrichtung gegenüber der Trangvorrichtung in Richtung auf die Frontanschläge des Anlegers hin geneigt sind, so daß mit dem Anheben der Tragvorrichtung eine in Richtung der genannten Frontanschläge gerichtete Schwerkraftkomponente die genannten Vorderkanten an diese Frontanschläge drückt.

Die vorgenannte vorausgegangene maschinengerechte Ausrichtung des Bogenstapels ist bei dieser bekannten Einrichtung jedoch insofern als problematisch anzusehen, als hierzu keine Einrichtungen vorgesehen sind, mittels derer die Vorderkanten der den Bogenstapel bildenden Bogen bezüglich der Frontanschläge des Anlegers ausgerichtet werden könnten. Der Bogenstapel muß vielmehr mittels eines Hand- oder Gabelstaplers in seine Lage auf der Tragvorrichtung verbracht werden.

Eine in einer Durchlaufrichtung von Bogen durchlaufende Bogen verarbeitende Maschine ist weiterhin aus der DE-A-27 36 832 bekannt. Dieser Maschine ist eine von einer Tragvorrichtung aufgenommene Stapelunterlage in Form einer Flachpalette zugeordnet, welche einen gegebenenfalls darauf aufgeschichteten Bogenstapel trägt und mittels einer Hubvorrichtung bis auf ein oberes Niveau anhebbar und bis auf ein unteres Niveau absenkbar ist.

Eine Solche Maschine weißt alle Merkmale des Oberbegriffs des Anspruchs 1 auf.

Eine seitliche Entnahme eines Bogenstapels aus dem Ausleger einer Bogendruckmaschine und eine seitliche Beschickung des Auslegers mit einer Stapelunterlage ist unter anderem druckschriftlich bekannt geworden aus dem Sonderdruck "Drupa 90 HN 1/48" der Anmelderin. Hierbei ist zur Versorgung des Auslegers mit Stapelunterlagen und zum Abtransport von hierauf aufgeschichteten Bogenstapeln eine den Ausleger quer durchlaufende Fördereinrichtung vorgesehen. Die Versorgung des zugehörigen Anlegers mit Bogenstapeln und der Abtransport abgearbeiteter Stapelunterlagen vom Anleger erfolgt hierbei mittels Transportmitteln, die eine in Durchlaufrichtung der Bogen durch die anschließenden Druckwerke gesehen vor dem Anleger angeordnete und quer zur Durchlaufrichtung orientierte Förderstrecke aufweisen, welche mit innerhalb des Anlegers sowie mit in einer Übergabestation angeordneten und jeweils zur Förderung in Durchlaufrichtung ausgebildeten Transportmitteln zusammenarbeitet. Als Stapelunterlagen werden hierbei die Flachpaletten verwendet, auf denen die Bogenstapel in ihrem Lieferzustand aufgeschichtet sind. Die Förderstrecke weist einen auf Schienen verfahrbaren Wagen auf. Die Transportmittel der Übergabestation übergeben eine hierauf unter gleichzeitiger Ausrichtung aufgesetzte einen Bogenstapel tragende Palette an den genannten Wagen. Die Ausrichtung in der Übergabestation erfolgt mittels einander gegenüberstehender Anschläge, die mit einander gegenüberliegenden Stirnseiten einer jeweiligen Palette zusammenwirken. Weiterhin ist ein fahrerloses Transportsystem vorgesehen, welches der gegenseitigen Anbindung von Anleger und Ausleger zur Versorgung des Auslegers mit am Anleger anfallenden leeren Paletten dient, sowie der Anbindung der Druckmaschine insgesamt an entsprechende Stellplätze für unbedruckte bzw. bedruckte auf Paletten aufgeschichtete Bogenstapel.

Mit der vorliegenden Erfindung soll nun eine Bogen verarbeitende Maschine und eine damit zusammenarbeitende Transporteinrichtung für Bogenstapel vorgeschlagen werden, welche einer Bedienungsperson ein behinderungsfreies Arbeiten erlauben und bei welchen auf die im Stand der Technik verwendeten vorab beschriebenen Einrichtungen zum Ausrichten der Bogenstapel, wie Vorstapeleinrichtungen oder Übergabestationen mit Ausrichtmitteln unter gleichzeitiger Beibehaltung der Möglichkeit einer maschinengerechten Ausrichtung und Positionierung der Bogenstapel verzichtet werden kann.

Diese Aufgabe wird gelöst mittels einer Bogen verarbeitenden Maschine und einer damit zusammenarbeitenden Transporteinrichtung gemäß Anspruch 1.

Mit dem Gegenstand der Erfindung ist in vorteilhafter Weise je ein Bereich unmittelbar vor dem Anleger und/oder hinter dem Ausleger jederzeit für beispielsweise Einstellarbeiten an einer Bogenvereinzelungseinrichtung des Anlegers oder beispielsweise zur Probebogenentnahme am Ausleger für einen eine Bogendruckmaschine bedienenden Drucker frei zugänglich. Des weiteren können Bogenstapel in ihrem Lieferzustand, also insbesondere ohne eine manuell auszuführende maschinengerechte Vorstapelung zur Beschickung des Anlegers verwendet werden. Im Lieferzustand sind Bogenstapel üblicherweise nämlich auf Flachpaletten aufgeschichtet, und zwar so, daß eine Längskante einer Flachpalette mit einer Längsseitenfläche eines Bogenstapels bündig ist.

Als weiterer Vorteil erweist sich, daß sich zur Beschickung vorgesehene Flachpaletten mit gegebenenfalls darauf aufgeschichteten Bogenstapeln einerseits und zum Abtransport bestimmte Flachpaletten, auf denen ebenfalls Bogenstapel aufgeschichtet sein können, weder bei der Beschickung noch beim Abtransport gegenseitig im Wege stehen, wie dies bei bekannten mit einer Bogendruckmaschine zusammenarbeitenden Transporteinrichtungen der Fall ist, bei welchen entsprechende Förderstrecken zum Transport sowohl in einer ersten als auch in einer hierzu entgegengesetzten zweiten Richtung vorgesehen sind.

In Weiterbildung des Erfindungsgegenstandes ist eine Verschiebeeinrichtung vorgesehen, mittels welcher eine von der Tragvorrichtung aufgenommene und von den Zwangsführungsmitteln ausgerichtete Flachpalette unter Beibehaltung ihrer Ausrichtung quer zur Transportrichtung gegenüber der Tragvorrichtung verschiebbar ist. Dies ermöglicht überdies auch eine schonende Behandlung der weiter oben erwähnten Vorderkanten der Bogen, da hiermit ein jeweiliger Bogenstapel ohne jegliche Berührung mit eventuellen Hindernissen, wie beispielsweise mit den ebenfalls weiter oben genannten Frontanschlägen in den Anleger eingebracht werden und erst nach Erreichen einer seitenregistergerechten Lage mittels der Verschiebeeinrichtung gegen diese Frontanschläge angestellt werden kann. Zum Abtransport einer zunächst gegen die Frontanschläge angestellten abgearbeiteten Flachpalette aus dem Anleger kann diese wiederum mittels der Verschiebeeinrichtung von den Frontanschlägen so weit abgerückt werden, daß sie von den auf der Tragvorrichtung befindlichen ersten Transportmitteln behinderungsfrei an außerhalb des Anlegers angeordnete zweite Transportmittel übergeben werden kann.

Beim Aufsetzen eines im oben erläuterten Lieferzustand auf eine Flachpalette aufgeschichteten Bogenstapels auf eine von den dem Anleger zugeordneten zweiten Transportmitteln gebildete Teilförderstrecke ist hiernach zur Erzielung einer maschinengerechten Positionierung lediglich darauf zu achten, daß die mit einer Langskante der Flachpalette bündige Längsseitenfläche eines Bogenstapels nach erfolgtem Transport in den Anleger hinein einem auf den Anleger folgenden Druckwerk zugewandt ist und daß die den Bogenstapel tragende Flachpalette so in die genannte Teilförderstrecke eingesetzt wird, daß deren Zwangsführungsmittel mit der Flachpalette in Eingriff sind. Ein derartiges Einsetzen eines Bogenstapels in die genannten zweiten Transportmittel kann dabei mit den üblichen Hilsmitteln, wie beispielsweise einem Hubstapler oder einem fahrerlosen Transportsystem erfolgen.

Gemäß einer Ausgestaltungsform des Erfindungsgegenstandes ist vorgesehen, daß die Förderstrecke in Transportrichtung ausgerichtete, nebeneinander liegende Führungsbahnen aufweist, an welchen einander gegenüberliegende in Transportrichtung orientierte Körperflächen einer jeweiligen Flachpalette geführt sind.

Ein wesentlicher Vorteil dieser Ausgestaltungsform besteht darin, daß zur Bildung einer Förderstrecke lediglich bekannte Transportmittel, wie z. B. Rollen, Kugeln oder Ketten mit entsprechenden Trag- und Lagerkonstruktionen und letztlich mit den Zwangsführungsmitteln in Form von beispielsweise jeweiligen Schienenpaaren oder auch Rollenbahnen vereinigt zu werden brauchen, so daß gegebenenfalls vorhandene Fördereinrichtungen zur Verwendung für den Erfindungsgegenstand nachgerüstet werden können.

Eine konstruktiv besonders vorteilhafte Vereinigung von Transport- und Zwangsführungsmitteln ergibt sich bei einer Ausgestaltungsform, die sich dadurch auszeichnet, daß die Transportmittel mit Spurkränzen versehene zylindrische Rotationskörper aufweisen, wobei die Spurkränze mit einander gegenüberliegenden in Transportrichtung orientierten Körperkanten einer jeweiligen Flachpalette zusammenwirken.

Hierbei können insbesondere Rollen mit jeweils konstantem Querschnitt verwendet werden, auf welchen zur Vereinigung mit den Zwangsführungsmitteln Spurkränze aufgeschoben und befestigt sind.

Ungeachtet des Formats der zu verarbeitenden Bogen wird immer darauf geachtet, daß eine in Durchlaufrichtung weisende Seitenfläche eines im Anleger maschinengerecht positionierten Bogenstapels an den weiter oben genannten Frontanschlägen anliegt. Dieser Gegebenheit wird mit dem Erfindungsgegenstand auf vorteilhafte Weise durch eine Ausbildung Rechnung getragen, die sich dadurch auszeichnet, daß eine jeweilige Flachpalette mit den ersten Führungselementen an einer Seite der Flachpalette in Eingriff ist, an welcher eine Seitenfläche der Flachpalette mit einer in Durchlaufrichtung weisenden Seitenfläche eines auf der Flachpalette aufgeschichteten Bogenstapels im wesentlichen bündig ist, und die ersten Führungselemente eine vom Format der den Bogenstapel bildenden Bogen unabhängige Lage aufweisen.

Hiermit wird erreicht, daß die in Durchlaufrichtung weisende Seitenfläche eines im Zusammenspiel von ersten und zweiten Transportmitteln entlang der Förderstrecke in eine seitenregistergerechte Lage im Anleger beförderten Bogenstapels von den genannten Frontanschlägen einen vom Format der zu bedruckenden Bogen unabhänigigen vorbestimmten Abstand aufweist, um welchen sodann der Bogenstapel mittels der Verschiebeeinrichtung in Richtung auf die Frontanschläge an diese herangefahren werden kann.

Eine Berücksichtigung unterschiedlicher Formate der zu bedruckenden Bogen und damit eine Berücksichtigung unterschiedlicher Formate von Flachpaletten kann beim Gegenstand der Erfindung mit der vorgenannten Ausbildung desselben auf verschiedene Arten erfolgen. Ein entsprechendes Ausführungsbeispiel zeichnet sich dadurch aus, daß die zweiten Führungselemente mehrfach in vom Format der jeweils zu verarbeitenden Bogen abhängigen Abständen zu den ersten Führungselementen vorgesehen sind.

Ein anderes Ausführungsbeispiel zeichnet sich dadurch aus, daß die zweiten Führungselemente einfach vorgesehen und auf das Format der jeweils zu verarbeitenden Bogen einstellbar sind.

Weiterhin kann vorgesehen werden, daß die ersten und zweiten Führungselemente an je einer Längsseite eines an einer Flachpalette zu deren Auflage auf der Förderstrecke vorgesehenen Längsholmes mit der Flachpalette in Eingriff sind.

Insbesondere das letztgenannte Ausführungsbeispiel erweist sich als besonders vorteilhaft bei der Verwendung von Flachpaletten gemäß DIN 15 141, Teil 1 mit längs angeordneten Bodenauflagen.

Die insbesondere mit den Zwangsführungsmitteln und der Verschiebeeinrichtung realisierte maschinengerechte Ausrichtung und Positionierung eines Bogenstapels im Anleger kann im Hinblick auf eine seitenregistergerechte Lage mit einer Weiterbildung des Erfindungsgegenstandes optimiert werden, welche sich dadurch auszeichnet, daß eine auf der Tragvorrichtung des Anlegers positionierte Flachpalette mit darauf aufgeschichtetem Bogenstapel mittels der dem Anleger zugeordneten ersten Transportmittel, einer diese ersten Transportmittel antreibenden Antriebseinrichtung und einer eine Seitenkante des Bogenstapels ortenden und die Antriebseinrichtung steuernden Sensoreinrichtung seitenregistergerecht justierbar ist.

Hierbei kann nämlich in vorteilhafter Weise von ohnehin vorhandenen Transportmitteln zum seitenregistergerechten Verfahren eines Bogenstapels im Anleger Gebrauch gemacht werden.

Eine ebenfalls insbesondere in Verbindung mit einem Anleger einer Bogendruckmaschine vorteilhafte Ausführungsform des Erfindungsgegenstandes ergibt sich durch eine derartige Ausgestaltung der Zwangsführungsmittel und wenigstens der ersten Transportmittel, daß ein in Durchlaufrichtung weisendes Ende einer auf die ersten Transportmittel aufgesetzten und von den Zwangsführungsmitteln geradegeführten Flachpalette die Zwangsführungsmittel und die ersten Transportmittel in Durchlaufrichtung überragt.

Eine derartige Ausführungsform hat den Vorteil, daß die in Durchlaufrichtung weisende Seitenfläche eines im Anleger plazierten Bogenstapels ohne weitere besondere konstruktive Vorkehrungen zur Anlage an die bereits erwähnten Frontanschläge gebracht werden kann, da keine Rücksicht notwendig ist auf mögliche Kollisionen zwischen den Frontanschlägen einerseits und den Transportmitteln sowie den Zwangsführungsmitteln andererseits.

Die Erfindung ist im folgenden anhand von Zeichnungen von Ausführungsbeispielen näher erläutert.

Hierin zeigt:
- Fig. 1: eine vereinfachte Seitenansicht einer Bogen verarbeitenden Maschine mit gemäß der Erfindung ausgestaltetem Anleger und Ausleger,
- Fig. 2: eine Draufsicht auf eine Bogen verarbeitende Maschine gemäß Fig. 1 und eine damit zusammenarbeitende Transporteinrichtung für Bogenstapel, wobei Anleger und Ausleger der Maschine teilweise weggebrochen sind,
- Fig. 3: eine Draufsicht auf eine Tragvorrichtung eines Anlegers ohne zugehörige Hubelemente zum Anheben und Absenken,
- Fig. 4: einen Querschnitt durch die Tragvorrichtung gemäß Fig. 3 entlang der Linie IV-IV,
- Fig. 5: einen Fig. 4 entsprechenden Querschnitt mit alternativer Anordnung von Zwangsführungsmitteln für Flachpaletten,
- Fig. 6: einen Querschnitt durch die Tragvorrichtung gemäß Fig. 3 entlang der Linie VI-VI,
- Fig. 7: einen Querschnitt durch die Tragvorrichtung gemäß Fig. 3 entlang der Linie VII-VII,
- Fig. 8: einen Querschnitt durch eine Tragvorrichtung eines Auslegers entlang der Linie VIII-VIII ohne zugehörige Hubelemente zum Anheben und Absenken,
- Fig. 9: einen Fig. 8 entsprechenden Querschnitt mit alternativ ausgebildeten Transport- und Zwangsführungsmitteln,
- Fig.10: einen Fig. 9 entsprechenden Querschnitt mit alternativ angeordneten Zwangsführungsmitteln,
- Fig.11: einen Fig. 9 entsprechenden Teil-Querschnitt mit einer weiteren Abwandlung der Zwangsführungsmittel,
- Fig.12: eine Ansicht in Richtung des Pfeils XII,
- Fig.13: einen Fig. 4 entsprechenden Querschnitt mit einer weiteren Abwandlung der Anordnung der Zwangsführungsmittel.

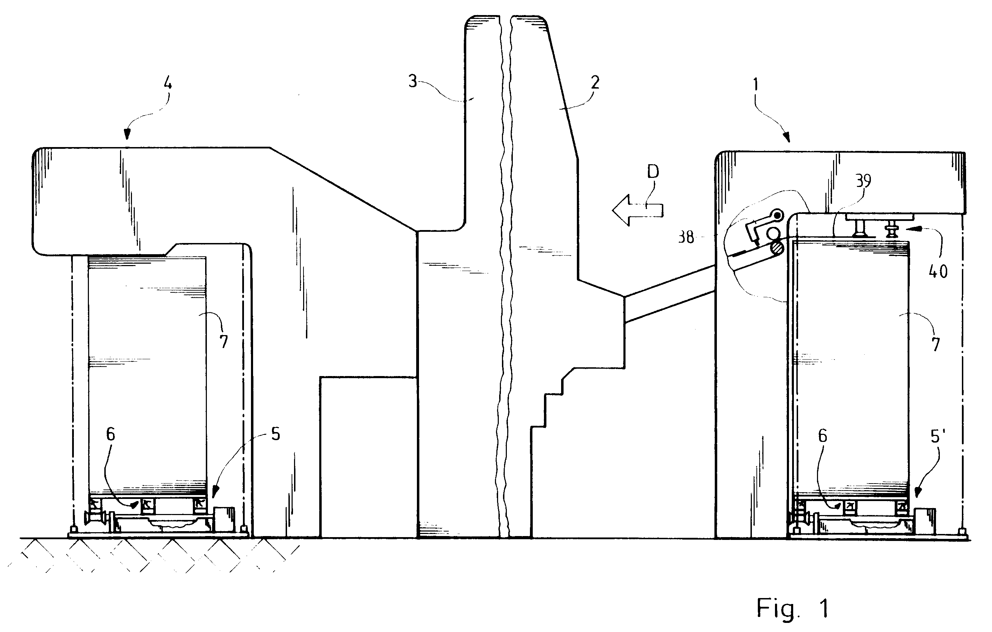

Als Bogen verarbeitende Maschine ist gemäß dem in Fig. 1 vereinfacht dargestellten Ausführungsbeispiel eine Bogendruckmaschine mit einem Anleger 1, einem ersten Druckwerk 2, einem letzten Druckwerk 3 und einem Ausleger 4 vorgesehen. Die Bogendruckmaschine wird entsprechend dem mit D bezeichneten Pfeil ausgehend vom Anleger 1 bis zum Ausleger 4 in einer Durchlaufrichtung von Bogen durchlaufen. Im Anleger 1 und im Ausleger 4 ist jeweils eine Tragvorrichtung 5 bzw. 5' für einen auf eine Stapelunterlage aufgeschichteten Bogenstapel 7 vorgesehen, wobei die Stapelunterlage als Flachpalette 6 ausgebildet ist. Eine jeweilige Tragvorrichtung 5 bzw. 5' ist an Hubelementen in Form von Seilen oder Ketten aufgehängt, die in Fig. 1 mittels strichpunktierter Linien dargestellt sind. Mittels dieser Hubelemente ist eine jeweilige Tragvorrichtung 5 bzw. 5' bis auf eine oberes Niveau anhebbar und bis auf ein unteres Niveau absenkbar. Dargestellt ist ein Betriebszustand, in welchem beide Tragvorrichtungen 5 und 5' auf ein unteres Niveau abgesenkt sind. Wie aus der eingangs genannten Druckschrift DE-C2-35 04 491 hervorgeht, sind Hubeinrichtungen zum Heben und Senken einer Tragvorrichtung für einen beispielsweise in einem Anleger positionierten Bogenstapel bekannt, so daß sich eine nähere diesbezügliche Erläuterung erübrigt.

Eine jeweilige Tragvorrichtung 5 bzw. 5' umfaßt erste Transportmittel, mittels derer eine der Maschine zugeordnete, als Flachpalette 6 ausgebildete Stapelunterlage mit darauf aufgeschichtetem Bogenstapel 7 in der Horizontalen verfahrbar ist. Bei dem in Fig. 1 dargestellten Ausführungsbeispiel sind diese ersten Transportmittel mit zylindrischen Rotationskörpern 8 gebildet.

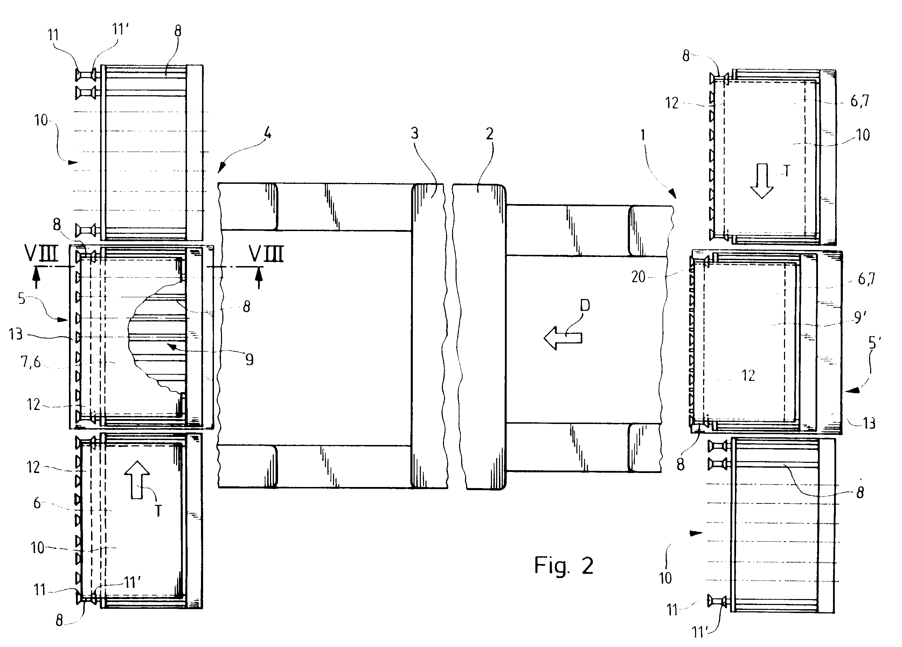

Fig. 2 läßt erkennen, daß eine Mehrzahl solcher Rotationskörper 8 unter gegenseitiger achsparalleler Anordnung eine erste Teilförderstrecke 9 bildet, und daß einer jeweiligen ersten Teilförderstrecke 9 beiderseits der Maschine jeweilige zweite Teilförderstrecken 10 zugeordnet sind, welche jeweils wiederum unter achsparalleler Anordnung einer Mehrzahl von Rotationskörpern 8 gebildet sind. Infolge einer gleichartigen Ausbildung und Anordnung von Rotationskörpern 8 in den einer ersten Teilförderstrecke 9 zugeordneten zweiten Teilförderstrecken 10 wie in der ersten Teilförderstrecke 9 ist mittels einer jeweiligen zweiten Teilförderstrecke 10 eine Flachpalette 6 ebenfalls in der Horizontalen verfahrbar.

In einem Betriebszustand, in welchem die jeweilige Tragvorrichtung 5 bzw. 5', wie in Fig. 1 dargestellt, auf das untere Niveau abgesenkt ist, stellen die jeweils mittels der Rotationskörper 8 gebildeten ersten Transportmittel der Tragvorrichtung 5 bzw. 5' und die den ersten Transportmitteln jeweils beiderseits der Maschine zugeordneten und ebenfalls mittels der Rotationskörper 8 gebildeten zweiten Transportmittel untereinander fluchtende Teilförderstrecken 9 bzw. 9' und 10 dar, mittels derer eine Flachpalette 6 in einer quer zur Durchlaufrichtung D orientierten Transportrichtung T transportiert werden kann. Im dargestellten Ausführungsbeispiel ist der Anleger 1 und der Ausleger 4 mit einer jeweiligen aus den Teilförderstrecken 9 bzw. 9' und 10 gebildeten Förderstrecke versehen. Die jeweilige Transportrichtung T ist nur beispielhaft angegeben. Für die ebenfalls beispielhaft dargestellte Bogendruckmaschine erscheint die gezeichnete Orientierung der die Transportrichtung angebenden Pfeile T jedoch zweckmäßig.

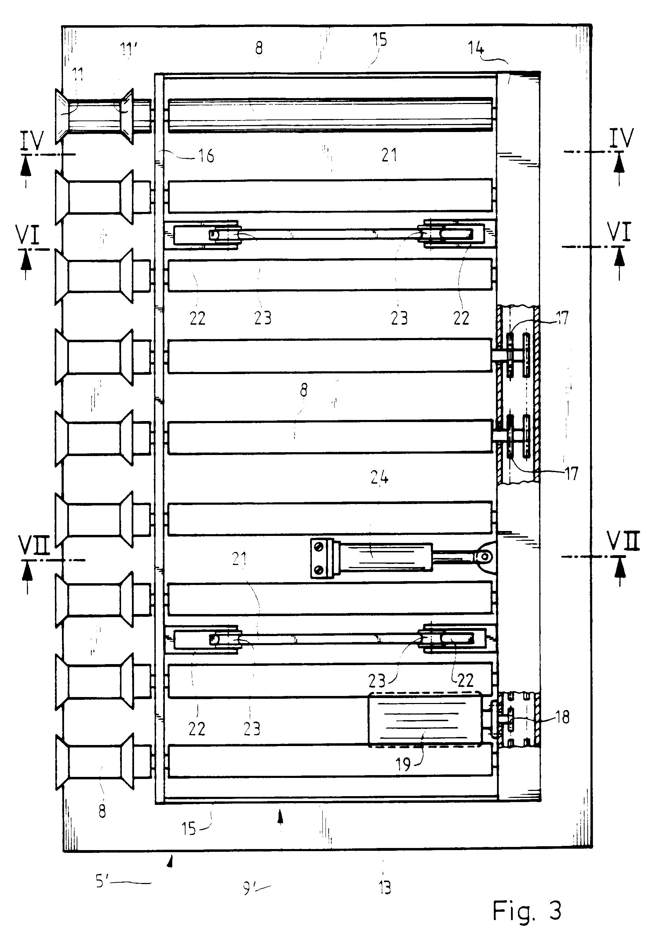

Die Teilförderstrecke 9' ist in Fig. 2 allerdings in einer nicht fluchtenden Lage dargestellt. Hierauf wird in Verbindung mit Fig. 3 noch näher eingegangen.

Wie aus Fig. 1 in Verbindung mit Fig. 2 erkennbar, ist eine jeweilige Flachpalette 6 auf jeweilige Rotationskörper 8 aufgesetzt, mittels derer jeweilige Transportmittel und letztlich jeweilige dem Anleger 1 und dem Ausleger 4 zugeordnete Förderstrecken gebildet sind. Dabei ist jeder der Rotationskörper 8 mit einem Paar von Spurkränzen 11, 11' versehen. Der gegenseitige Abstand der Spurkränze 11, 11' eines jeweiligen Paares von Spurkränzen 11, 11' ist so gewählt, daß die Spurkränze 11, 11' mit einander gegenüberliegenden in Transportrichtung T orientierten Körperkanten der aufgesetzten Flachpalette 6 zusammenwirken und somit entlang einer jeweiligen Förderstrecke wirksame Zwangsführungsmittel für die Flachpalette 6 darstellen. Die Spurkränze 11 stellen hierbei erste und die Spurkränze 11' zweite Führungselemente der Zwangsführungsmittel dar. Als in Transportrichtung T orientierte Körperkanten der aufgesetzten Flachpalette, mit welcher die Zwangsführungsmittel in Form der Spurkränze 11, 11' unmittelbar zusammenwirken, werden dabei die unteren Längskanten eines an der Flachpalette 6 zu deren Auflage auf der Förderstrecke vorgesehenen Längsholmes benutzt.

Gemäß Fig. 3 ist eine erste Teilförderstrecke, im dargestellten Falle die dem Anleger 1 zugeordnete Teilförderstrecke 9', auf eine Hubplatte 13 aufgesetzt. An der Hubplatte 13 notwendige Befestigungsmittel für die oben erwähnten Hubelemente in Form von Seilen oder Ketten sind nicht dargestellt. Entsprechende Befestigungsmittel sind in Übereinstimmung mit der Lage jeweiliger Seile oder Ketten zum Heben und Senken der Hubplatte 13 üblicherweise im Bereich der Ecken der Hubplatte 13 vorgesehen.

Die in der Teilförderstrecke 9' enthaltenen ersten Transportmittel weisen im Ausführungsbeispiel gemäß Fig. 3, wie bereits erwähnt, mit Spurkränzen 11, 11' versehene zylindrische Rotationskörper 8 auf. Diese sind in einem oberhalb der Hubplatte 13 angeordneten aus einem Getriebekasten 14 und Rahmenschenkeln 15 und 16 gebildeten Rahmen gelagert. Zufolge der unter sich parallelen Anordnung der Rotationskörper 8 mit quer zur Transportrichtung T (siehe Fig. 2) verlaufenden Rotationsachsen erstreckt sich der Getriebekasten 14, der an Achszapfen der Rotationskörper 8 befestigte Triebräder 17 und ein Antriebsrad 18 umschließt, in Transportrichtung T. An dem Getriebekasten 14 ist ein das Antriebsrad 18 treibender Motor 19 angeflanscht. Das Antriebsrad 18 und die Triebräder 17 stehen über in Fig. 3 strichpunktiert angedeutete Transmissionsmittel derart miteinander in Verbindung, daß die Rotationskörper 8 in jeweils gleicher Drehrichtung angetrieben werden.

Insoweit weisen vorteilhafterweise auch die Teilförderstrecken 9 und 10 (siehe Fig. 2) denselben Aufbau auf. Es ist lediglich dafür zu sorgen, daß bei den nicht auf eine Hubplatte 13 aufgesetzten seitlich der Maschine angeordneten Teilförderstrecken 10 gleiches Niveau für die Rotationskörper 8 eingehalten wird wie bei den Teilförderstrecken 9 und 9' in einem auf das untere Niveau abgesenkten Betriebszustand.

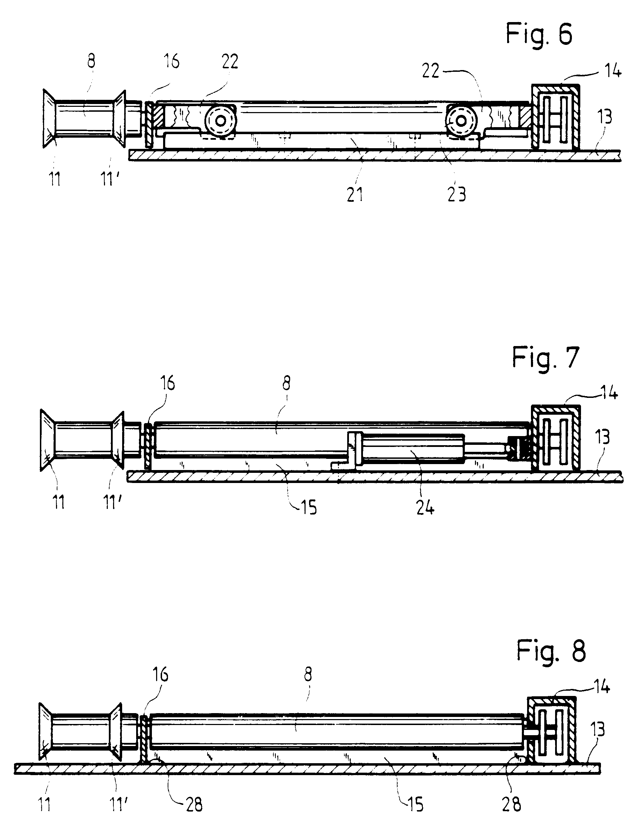

In Verbindung mit Fig. 3 wird im folgenden näher auf die in Fig. 2 gemäß einer Weiterbildung des Erfindungsgegenstandes in nicht fluchtender Lage dargestellte Teilförderstrecke 9' eingegangen. In der nicht mit den beiderseits der Maschine angeordneten Teilförderstrecken 10 fluchtenden Lage der im Anleger 1 der Maschine vorgesehenen Teilförderstrecke 9' liegt ein Betriebszustand vor, in welchem eine von der Tragvorrichtung 5' aufgenommene und von den Zwangsführungsmitteln in Form der Spurkränze 11, 11' ausgerichtete Flachpalette 6 quer zur Transportrichtung T gegenüber der Tragvorrichtung 5' zur Anlage der Bogenstapels 7 an im Anleger 1 vorgesehenen Frontanschlägen 20 (Fig. 2) verschoben ist. Zur Erreichung eines solchen Betriebszustandes ist die bereits erwähnte Verschiebeeinrichtung vorgesehen. Diese Verschiebeeinrichtung ist im dargestellten Ausführungsbeispiel gebildet aus einem quer zur Transportrichtung T (siehe Fig. 2) verlaufenden auf der Hubplatte 13 befestigen Paar von Schienen 21 (siehe auch Fig. 6), am Rahmenschenkel 16 und am Getriebekasten 14 mittels Lagerböcken 22 drehbar angeordneten Spurrollen 23, welche auf den Schienen 21 abrollen, und aus einer einerseits mit der Hubplatte 13 und andererseits mit dem Rahmen in Wirkverbindung stehenden Kolben-Zylinder-Einheit 24 (siehe auch Fig. 7) mit einer in Durchlaufrichtung D (siehe Fig. 2) orientieren Wirkrichtung.

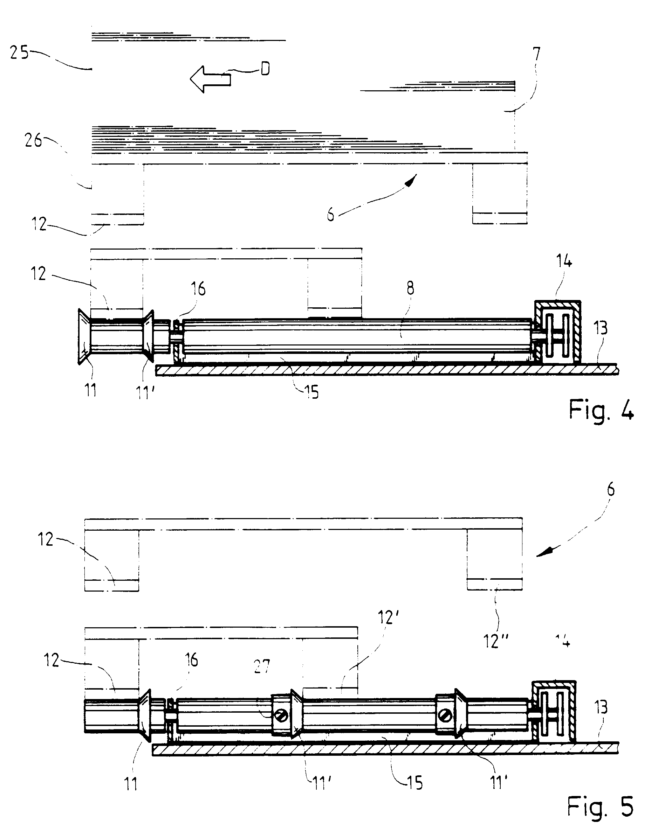

In Fig. 4 ist mittels strichpunktierter Linien angedeutet, wie ein Bogenstapel 7 in seinem Lieferzustand auf eine Flachpalette aufgeschichtet ist. Wie erwähnt ist hierbei eine in Durchlaufrichtung D weisende Seitenfläche 25 des Bogenstapels 7 mit einer Seitenfläche 26 der Flachpalette 6 bündig, während eine dieser Seitenfläche 25 des Bogenstapels 7 gegenüberliegende Seitenfläche gegenüber einer benachbarten Seitenfläche der Flachpalette im allgemeinen versetzt ist. Entgegen der Darstellung in Fig. 4 kann der Bogenstapel 7 die Flachpalette 6 hier auch beispielsweise seitlich überragen.

Der Umstand der fluchtenden Seitenflächen 25 und 26 von einerseits Bogenstapel 7 und andererseits Flachpalette 6 wird nun in vorteilhafter Weise genutzt, um eine vom Format jeweils zu verarbeitender Bogen 39 unabhängige lagegerechte Zwangsführung des Bogenstapels 7 zu verwirklichen. Gemäß Figuren 4 und 5 ist hierzu vorgesehen, daß der ein erstes Führungselement darstellende Spurkranz 11 in Eingriff mit einem der Seitenfläche 26 der Flachpalette 6 zugeordneten Längsholm 12 der Flachpalette 6 ist. Auf diese Weise ist erreicht, daß ein erstes Führungselement, wie hier in Form des Spurkranzes 11, eine vom Format der den Bogenstapel 7 bildenden Bogen 39 unabhängige Lage aufweist.

Eine stets gleiche maschinengerechte Ausrichtung des Bogenstapels 7 unabhängig vom Format der diesen bildenden Bogen 39 wird somit auf besonders einfache Weise dadurch erreicht, daß entsprechend Fig. 4 je ein Spurkranz 11 bzw. 11' mit je einer Längskante des Längsholmes 12 in Eingriff gebracht ist.

Als besonders vorteilhaft erweist sich hierbei mit Blick auf die Platzverhältnisse zur Unterbringung einer Teilförderstrecke 9 bzw. 9' im Ausleger 4 bzw. Anleger 1 der Maschine eine mit Bezug auf den Rahmenschenkel 16 fliegende Lagerung eines den Spurkranz 11 aufweisenden und den damit in Eingriff stehenden Längsholm tragenden Abschnitts des Rotationskörpers 8.

Fig. 5 gibt ein Ausführungsbeispiel wieder, bei welchem auf einem Rotationskörper 8 zwei zweite Führungselemente in Form der Spurkränze 11' vorgesehen sind. Der Abstand von dem ersten Führungselement in Form des Spurkranzes 11 ist dabei jeweils an die Lage eines weiteren Längsholmes 12' bzw. 12'' einer Flachpalette 6 mit jeweils anderem Format angepaßt.

In Fig. 5 ist weiterhin beispielhaft in Form eines mittels einer Stellschraube 27 auf den Rotationskörper 8 fixierbaren Spurkranzes 11' ein zweites Führungselement dargestellt, welches auf ein jeweiliges Format der Flachpalette und damit auf das Format der jeweils zu verarbeitenden Bogen 39 einstellbar ist. In diesem Falle ist neben einem ersten Führungselement in Form des Spurkranzes 11 nur ein einziger als zweites Führungselement fungierender Spurkranz 11' je Rotationskörper 8 erforderlich.

Während im Falle der quer zur Transportrichtung T verschieblichen Teilförderstrecke 9' der die Rotationskörper 8 lagernde Rahmen aus Getriebekasten 14 und Rahmenschenkeln 15 und 16 (siehe Fig. 2) gegenüber der Hubplatte 13 verschieblich ist, ist der entsprechende Rahmen im Falle nicht verschieblicher Teilförderstrecken fest mit einer Unterlage verbunden. Im Falle der im Ausleger 4 angeordneten Teilförderstrecke 9 bildet die Hubplatte 13 die entsprechende Unterlage.

In Fig. 8 ist eine entsprechende feste Verbindung zwischen dem Rahmen und der Hubplatte 13 beispielhaft durch Schweißnähte 28 dargestellt.

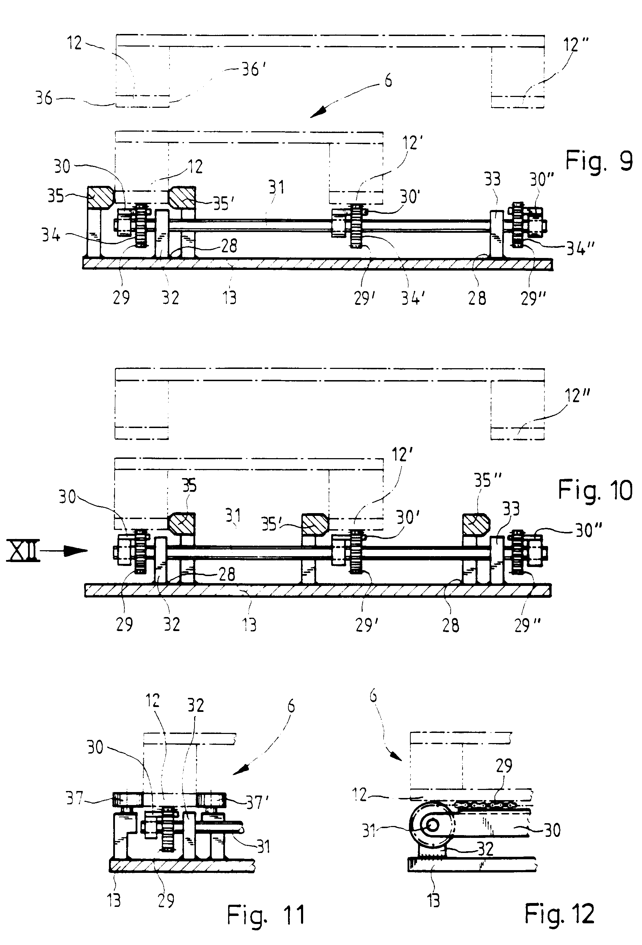

In Fig. 9 sind am Beispiel einer nicht verschieblichen Teilförderstrecke, im vorliegenden Falle der Teilförderstrecke 9, Abwandlungen der Transport- und Zwangsführungsmittel dargestellt.

Hierbei sind die Transportmittel als Ketten 29 ausgebildet, die mittels einer jeweiligen Kettenstützschiene 30 abgestützt sind. In der Transportrichtung T gesehen jeweils am Beginn und am Ende der Teilförderstrecke 9 ist ein zur Transportrichtung T quer verlaufender Kettenradschaft 31 gelagert. Zur Lagerung eines Kettenradschafts 31 dient als Ersatz für den Rahmenschenkel 16 im Beispiel nach Fig. 3 eine erste Stütze 32 und als Ersatz für den Getriebekasten 14 im Beispiel nach Fig. 3 eine zweite Stütze 33. Anstelle des fliegend gelagerten Abschnitts des Rotationskörpers 8 im Beispiel nach Figuren 3 bis 8 ist auf einem bezüglich der ersten Stütze 32 fliegend gelagerten Abschnitt des Kettenradschafts 31 ein von der Kette 29 umschlungenes Kettenrad 34 vorgesehen. Auf die mittels der Kettenstützschiene 30 abgestützte Kette 29 ist nunmehr der Längsholm 12 der Flachpalette 6 aufgesetzt.

In entsprechendem Abstand zum Kettenrad 34 ist zur Aufnahme eines zweiten Längsholmes 12' bzw. 12'' einer Flachpalette 6 am Kettenradschaft 31 eine gleichartige Anordnung aus Kettenstützschiene 30' bzw. 30'', Kette 29' bzw. 29'' und von dieser umschlungenem Kettenrad 34' bzw. 34'' vorgesehen. Die jeweilige Kettenstützschiene 30, 30', 30'' ist dabei ihrerseits an einem jeweiligen Kettenradschaft 31 am Beginn und am Ende der Teilförderstrecke 9 abgestützt (siehe auch Fig. 12).

Die Zwangsführungsmittel sind im Beispiel nach Fig. 9 in Form von Führungsschienen 35, 35' vorgesehen, die in Transportrichtung T ausgerichtet sind. In der Fig. 9 sind diese im Querschnitt erkennbar. Die Führungsschienen 35, 35' liegen nebeneinander und sind in Eingriff mit einander gegenüberliegenden in Transportrichtung T orientierten Körperflächen 36 und 36' des Längsholmes 12 der auf den Ketten 29 und 29' aufsitzenden Flachpalette 6.

Das Ausführungsbeispiel nach Fig. 10 weicht insofern von jenem nach Fig. 9 ab, als nunmehr die als zweite Führungselemente fungierenden Führungsschienen 35' bzw. 35'' in Eingriff mit einem weiteren Längsholm 12' bzw. 12'' der Flachpalette 6 stehen.

In beiden Ausführungsbeispielen der Figuren 9 und 10 nehmen zumindest die als erste Führungselemente fungierenden Führungsschienen 35 wiederum eine vom Format der zu verarbeitenden Bogen unabhängige Lage ein.

Das Ausführungsbeispiel gemäß Fig. 11 stellt eine weitere mögliche Variante hinsichtlich der in Transportrichtung T ausgerichteten Führungsbahnen dar. Anstelle der Führungsschienen 35 und 35' sind hierbei Rollenbahnen vorgesehen. Eine die ersten Führungselemente repräsentierende Rollenbahn ist hierbei mittels der Rollen 37 gebildet und eine die zweiten Führungselemente repräsentierende Rollenbahn ist mittels der Rollen 37' gebildet. Durch die Darstellungsweise in Fig. 11, welche einen Teilquerschnitt durch eine Tragvorrichtung wiedergibt, ist von den Rollen 37 und 37' jeweils nur eine einzige sichtbar.

Zur maschinengerechten Ausrichtung eines Bogenstapels sind die Antriebsmittel in Form von Triebrädern 17, Antriebsrad 18, Motor 19 und geeigneten Transmissionsmitteln zu deren gegenseitigen Wirkverbindung nicht zwingend notwendig. Ein Transport des Bogenstapels 7 entlang der Teilförderstrecken ist ohne weiteres auch manuell möglich. Die genannten Antriebsmittel werden jedoch im Rahmen der Erfindung in einer vorteilhaften Weiterbildung zur seitenregistergerechten Justierung des Bogenstapels 7 im Anleger 1 genutzt. Hierzu sind im Anleger 1 Sensoren 38 vorgesehen, mittels welcher eine in Durchlaufrichtung D orientierte Kante eines zu verarbeitenden Bogens 39 geortet wird. Eine prinzipielle Möglichkeit der Anordnung solcher Sensoren ist in Fig. 1 angegeben. Hierbei erfassen die Sensoren 38 die seitliche Lage eines Bogens 39, nachdem dieser bereits von Schleppsaugern einer Bogenvereinzelungseinrichtung 40 erfaßt wurde. Näheres kann beispielsweise der Druckschrift DE-A1-34 33 994 entnommen werden. Das seitenregistergerechte Justieren eines Bogenstapels 7 im Anleger 1 erfolgt im Rahmen der Erfindung nachdem eine Flachpalette 6 mit darauf aufgeschichtetem Bogenstapel 7 entlang entsprechender Teilförderstrecken, hier 10 und 9', mittels der oben beschriebenen Antriebsmittel 17, 18, 19 in eine Sollposition auf der Tragvorrichtung 5' verbracht ist. In dieser Sollposition wird der Bogenstapel 7 zunächst mittels eines Endschalters, wie beispielsweise aus der Druckschrift DE-PS 10 99 556 ersichtlich, durch Abschalten des Motors 19 stillgesetzt. Die weitere Ansteuerung des Motors 19 erfolgt sodann mittels einer mit den Sensoren 38 gebildeten Sensoreinrichtung, wie dies beispielsweise in der bereits genannten Druckschrift DE-A1-34 33 994 im einzelnen erläutert ist.

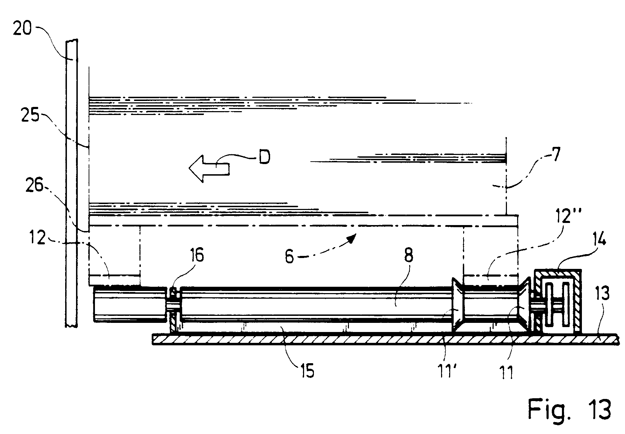

Während beim Ausführungsbeispiel gemäß Fig. 2 die Spurkränze 11 in die Lücken zwischen den bereits erwähnten Frontanschlägen 20 hineinragen, sind diese Lücken bei der in Fig. 13 dargestellten Ausführungsform frei von jeglichen Bauteilen der Transportmittel und der Zwangsführungsmittel. In einer mittels der Kolben-Zylinder-Einheit 24 (siehe Fig. 3 und 7) einstellbaren Betriebsstellung ist - entgegen der Darstellung in Fig. 13 - die Seitenfläche 25 des Bogenstapels 7 an die Frontanschläge 20 angestellt. Die den Frontanschlägen 20 zugewandten, fliegend gelagerten Enden der Rotationskörper 8 sind im vorliegenden Beispiel völlig frei von Zwangsführungsmitteln. Solche Zwangsführungsmittel sind hierbei an den den Frontanschlägen 20 abgewandten Enden der Rotationskörper 8 in Form eines Paares von Spurkränzen 11, 11' vorgesehen. Die Lage dieser Spurkränze 11, 11' und die Gesamtlänge der Rotationskörper 8 sind dabei so aufeinander abgestimmt, daß das in Durchlaufrichtung D weisende Ende der auf die Rotationskörper 8 aufgesetzten und von den Spurkränzen 11, 11' geradegeführten Flachplatte 6 in Durchlaufrichtung D über die Rotationskörper 8 hinausragt. In der oben genannten Betriebsstellung besteht somit ein Abstand zwischen den Frontanschlägen 20 einerseits und den fliegend gelagerten Enden der hier in Form von Rotationskörpern 8 vorgesehenen Transportmittel.

Der gleiche Effekt kann auch mit einer Ausführungsform gemäß beispielsweise Fig. 5 erreicht werden, wenn hier das fliegend gelagerte Ende der Rotationskörper 8 gekürzt wird.

Auch mit einer Ausführungsform gemäß Fig. 10 läßt sich der genannte Effekt erreichen, wenn die dortigen Führungsschienen 35 und 35' bzw. 35 und 35'' in Richtung auf die dortige erste Stütze 32 soweit verschoben angeordnet werden, daß das in Fig. 10 linke Ende des dortigen Kettenradschaftes 31 in Durchlaufrichtung D von der Flachpalette 6 überragt wird.

### BEZUGSZEICHENLISTE

- 1: Anleger
- 2: erstes Druckwerk
- 3: letztes Druckwerk
- 4: Ausleger
- 5, 5': Tragvorrichtung
- 6: Flachpalette
- 7: Bogenstapel
- 8: Rotationskörper
- 9, 9': erste Teilförderstrecke
- 10: zweite Teilförderstrecke
- 11, 11': Spurkranz
- 12, 12', 12'': Längsholm
- 13: Hubplatte
- 14: Getriebekasten
- 15: Rahmenschenkel
- 16: Rahmenschenkel
- 17: Triebrad
- 18: Antriebsrad
- 19: Motor
- 20: Frontanschlag
- 21: Schiene
- 22: Lagerbock
- 23: Spurrolle
- 24: Kolben-Zylinder-Einheit
- 25: Seitenfläche des Bogenstapels 7
- 26: Seitenfläche der Flachpalette 6
- 27: Stellschraube
- 28: Schweißnaht
- 29, 29', 29'': Kette
- 30, 30', 30'': Kettenstützschiene
- 31: Kettenradschaft
- 32: erste Stütze für Kettenradschaft 31
- 33: zweite Stütze für Kettenradschaft 31
- 34, 34', 34'': Kettenrad
- 35, 35', 35'': Führungschiene
- 36, 36': Körperfläche
- 37, 37': Rolle
- 38: Sensor
- 39: Bogen
- 40: Bogenvereinzelungseinrichtung
- D: Pfeil/Durchlaufrichtung
- T: Pfeil/Transportrichtung

## Patentansprüche

1. Bogen verarbeitende Maschine und damit zusammenarbeitende Transporteinrichtung zum Transport von Stapelunterlagen für Bogenstapel (7),
wobei
die Maschine in einer Durchlaufrichtung (D) von Bogen durchlaufen wird, die in Form eines Bogenstapels (7) in einem Anleger (1) bereitgestellt sind, mit
- einer auf ein oberes Niveau anhebbaren und auf ein unteres Niveau absenkbaren Tragvorrichtung (5, 5') zur Aufnahme einer Stapelunterlage mit einem gegebenenfalls darauf aufgeschichteten Bogenstapel (7),
wobei
die Tragvorrichtung (5, 5') erste Transportmittel umfaßt, mittels derer die Stapelunterlage gegenüber der Tragvorrichtung (5, 5') horizontal in einer Transportrichtung (T) verfahrbar ist,
sowie mit
- den ersten Transportmitteln zugeordneten zweiten Transportmitteln, die zusammen mit den ersten Transportmitteln der auf das untere Niveau abgesenkten Tragvorrichtung (5, 5') eine aus fluchtenden Teilförderstrecken (9, 9', 10) zusammengesetzte, quer zur Durchlaufrichtung (D) orientierte Förderstrecke für die Stapelunterlagen bilden,
wobei
- die Stapelunterlagen in Form von Flachpaletten (6) ausgebildet sind,
**dadurch gekennzeichnet**, daß
- die Förderstrecke aus ersten Führungselementen (11, 35, 37) und zweiten Führungselementen (11', 35', 35'', 37') gebildete Zwangsführungsmittel aufweist, die unmittelbar mit der jeweiligen, die Stapelunterlage bildenden Flachpalette (6) zusammenwirken.

2. Bogen verarbeitende Maschine und damit zusammenarbeitende Transporteinrichtung nach Anspruch 1,
**gekennzeichnet durch**,
eine Verschiebeeinrichtung, mittels welcher eine von der Tragvorrichtung (5') aufgenommene und von den Zwangsführungsmitteln (Spurkränze 11, 11') ausgerichtete Flachpalette (6) unter Beibehaltung ihrer Ausrichtung quer zur Transportrichtung (T) gegenüber der Tragvorrichtung (5') verschiebbar ist.

3. Bogen verarbeitende Maschine und damit zusammenarbeitende Transporteinrichtung nach Anspruch 1,
**dadurch gekennzeichnet**,
daß die Förderstrecke in Transportrichtung (T) ausgerichtete, nebeneinander liegende Führungsbahnen (Führungsschienen 35, 35', 35'') aufweist, an welchen einander gegenüberliegende in Transportrichtung (T) orientierte Körperflächen (36, 36') einer jeweiligen Flachpalette (6) geführt sind.

4. Bogen verarbeitende Maschine und damit zusammenarbeitende Transporteinrichtung nach Anspruch 1,
**dadurch gekennzeichnet**,
daß die Transportmittel mit Spurkränzen (11, 11') versehene zylindrische Rotationskörper (8) aufweisen, wobei die Spurkränze (11, 11') mit einander gegenüberliegenden in Transportrichtung (T) orientierten Körperkanten einer jeweiligen Flachpalette (6) zusammenwirken.

5. Bogen verarbeitende Maschine und damit zusammenarbeitende Transporteinrichtung nach Anspruch 1,
**dadurch gekennzeichnet**, daß
- eine jeweilige Flachpalette (6) mit den ersten Führungselementen (11, 35, 37) an einer Seite der Flachpalette (6) in Eingriff ist, an welcher eine Seitenfläche (26) der Flachpalette (6) mit einer in Durchlaufrichtung (D) weisenden Seitenfläche (25) eines auf der Flachpalette (6) aufgeschichteten Bogenstapels (7) im wesentlichen bündig ist, und
- die ersten Führungselemente (11, 35, 37) eine vom Format der den Bogenstapel (7) bildenden Bogen unabhängige Lage aufweisen.

6. Bogen verarbeitende Maschine und damit zusammenarbeitende Transporteinrichtung nach Anspruch 5,
**dadurch gekennzeichnet**,
daß die zweiten Führungselemente (11', 35', 35'', 37') mehrfach in vom Format der jeweils zu verarbeitenden Bogen abhängigen Abständen zu den ersten Führungselementen (11, 35, 37) vorgesehen sind.

7. Bogen verarbeitende Maschine mit damit zusammenarbeitende Transporteinrichtung nach Anspruch 5,
**dadurch gekennzeichnet**,
daß die zweiten Führungselemente (11', 35', 35'', 37') einfach vorgesehen und auf das Format der jeweils zu verarbeitenden Bogen einstellbar sind.

8. Bogen verarbeitende Maschine und damit zusammenarbeitende Transporteinrichtung nach Anspruch 5,
**dadurch gekennzeichnet**,
daß die ersten und zweiten Führungselemente (11, 11'; 35, 35', 37, 37', 37'') and je einer Längsseite eines an einer Flachpalette (6) zu deren Auflage auf der Förderstrecke vorgesehenen Längsholmes (12) mit der Flachpalette (6) in Eingriff sind.

9. Bogen verarbeitende Maschine und damit zusammenarbeitende Transporteinrichtung nach Anspruch 1,
**dadurch gekennzeichnet**,
daß eine auf der Tragvorrichtung (5') des Anlegers (1) positionierte Flachpalette (6) mit darauf aufgeschichtetem Bogenstapel (7) mittels der dem Anleger (1) zugeordneten ersten Transportmittel, einer diese ersten Transportmittel antreibenden Antriebseinrichtung (17, 18, 19) und einer eine in Durchlaufrichtung D orientierte Kante eines zu verarbeiteden Bogens ortenden und die Antriebseinrichtung (17, 18, 19) steuernden Sensoreinrichtung seitenregistergerecht justierbar ist.

10. Bogen verarbeitende Maschine und damit zusammenarbeitende Transporteinrichtung nach Anspruch 1,
**gekennzeichnet durch**,
eine derartige Ausgestaltung der Zwangsführungsmittel und wenigstens der ersten Transportmittel, daß ein in Durchlaufrichtung (D) weisendes Ende einer auf die ersten Transportmittel aufgesetzten und von den Zwangsführungsmitteln geradegeführten Flachpalette (6) die Zwangsführungsmittel und die ersten Transportmittel in Durchlaufrichtung (D) überragt.

## Claims

1. Sheet-processing machine and conveying device, working together with this machine, for conveying stack supports for stacks (7) of sheets, in which sheets which are made ready in the form of a sheet stack (7) in a feeder (1) pass through the machine in one travel direction (D), with
- a carrier arrangement (5, 5') which can be raised to an upper level and lowered to a lower level for receiving a stack support with a sheet stack (7) optionally piled up thereon, the carrier arrangement (5, 5,) comprising first conveying means with the aid of which the stack support can be driven horizontally in a transport direction (T) in relation to the carrier arrangement (5, 5'),
and with
- second conveying means which are allocated to the first conveying means and which, together with the first conveying means of the carrier arrangement (5, 5') lowered to the lower level, form a conveyor stretch for the stack supports, which conveyor stretch is composed of aligned partial conveyor stretches (9, 9', 10) and is oriented transversely with respect to the travel direction (D),
in which
- the stack supports are designed in the form of flat pallets (6),
characterized in that
- the conveyor stretch has forced guidance means which are formed from first guide elements (11, 35, 37) and second guide elements (11', 35', 35'', 37') and which interact directly with the respective flat pallet (6) forming the stack support.

2. Sheet-processing machine and conveying device working together with this machine according to Claim 1, characterized by a displacement device with the aid of which a flat pallet (6) received by the carrier arrangement (5') and aligned by the forced guidance means (wheel flanges 11, 11') can, while retaining its alignment, be displaced in relation to the carrier arrangement (5') transversely with respect to the transport direction (T).

3. Sheet-processing machine and conveying device working together with this machine according to Claim 1, characterized in that the conveyor stretch has guide tracks (guide rails 35, 35', 35'') which are aligned in the transport direction (T) and lie alongside one another, and on which body surfaces (36, 36'), lying opposite one another and oriented in the transport direction (T), of a respective flat pallet (6) are guided.

4. Sheet-processing machine and conveying device working together with this machine according to Claim 1, characterized in that the conveying means have cylindrical rotational bodies (8) provided with wheel flanges (11, 11'), the wheel flanges (11, 11') interacting with body edges, lying opposite one another and oriented in the transport direction (T), of a respective flat pallet (6).

5. Sheet-processing machine and conveying device working together with this machine according to Claim 1,
characterized in that
- a respective flat pallet (6) is in engagement with the first guide elements (11, 35, 37) on one side of the flat pallet (6) on which a side surface (26) of the flat pallet (6) is essentially flush with a side surface (25), pointing in the travel direction (D), of a sheet stack (7) piled up on the flat pallet (6), and
- the first guide elements (11, 35, 37) have a position independent of the format of the sheets forming the sheet stack (7).

6. Sheet-processing machine and conveying device working together with this machine according to Claim 5, characterized in that the second guide elements (11', 35', 35'', 37') are provided multiply at spacings from the first guide elements (11, 35, 37), which spacings are dependent on the format of the sheets to be processed in each case.

7. Sheet-processing machine and conveying device working together with this machine according to Claim 5, characterized in that the second guide elements (11', 35', 35'', 37') are provided singly and can be set to the format of the sheets to be processed in each case.

8. Sheet-processing machine and conveying device working together with this machine according to Claim 5, characterized in that the first and second guide elements (11, 11'; 35, 35', 37, 37', 37'') are in engagement with a flat pallet (6) on in each case one longitudinal side of a longitudinal spar (12) provided on the flat pallet (6) for the latter to bear on the conveyor stretch.

9. Sheet-processing machine and conveying device working together with this machine according to Claim 1, characterized in that a flat pallet (6) positioned on the carrier arrangement (5') of the feeder (1), with a sheet stack (7) piled up thereon, can be adjusted correct to the side register with the aid of the first conveying means allocated to the feeder (1), a drive device (17, 18, 19) driving these first conveying means, and a sensor device locating an edge, oriented in the travel direction D, of a sheet to be processed and controlling the drive device (17, 18, 19).

10. Sheet-processing machine and conveying device working together with this machine according to Claim 1, characterized in that the forced guidance means and at least the first conveying means are configured in such a way that one end, pointing in the travel direction (D), of a flat pallet (6) placed on the first conveying means and guided linearly by the forced guidance means protrudes beyond the forced guidance means and the first conveying means in the travel direction (D).

## Revendications

1. Machine de traitement de feuilles et dispositif de transport coopérant avec celle-ci en vue du transport de supports de piles pour des piles de feuilles (7),
dans laquelle
la machine est traversée, dans un sens de circulation (D), par des feuilles qui sont préparées dans un margeur (1), sous la forme d'une pile de feuilles (7), comportant
- un dispositif de support (5, 5') pouvant être relevé à un niveau supérieur et abaissé à un niveau inférieur, destiné à recevoir un support de pile avec une pile de feuilles (7) éventuellement empilée sur celui-ci, le dispositif de support (5, 5') comportant des premiers moyens de transport, grâce auxquels le support de pile peut être déplacé par rapport au dispositif de support (5, 5'), horizontalement, dans le sens de transport (T),
et comportant
- des seconds moyens de transport associés aux premiers moyens de transport, qui avec les premiers moyens de transport du dispositif de support (5, 5') abaissé au niveau inférieur, forment un parcours de transport des supports de pile, constitué de parcours de transport partiels (9, 9', 10) alignés, orienté transversalement au sens de circulation (D),
dans laquelle
- les supports de piles sont réalisés sous la forme de palettes plates (6),
caractérisée en ce que
- le parcours de transport comporte des moyens de guidage forcés, formés de premiers éléments de guidage (11, 35, 37) et de seconds éléments de guidage (11', 35', 35'', 37'), qui coopèrent directement avec la palette plate (6) respective, formant le support de pile.

2. Machine de traitement de feuilles et dispositif de transport coopérant avec celle-ci selon la revendication 1, caractérisée par un dispositif de translation, au moyen duquel une palette plate (6), reprise par le dispositif de support (5') et orientée par les moyens de guidage forcés (boudins 11, 11'), peut être déplacée par rapport au dispositif de support (5'), tout en respectant son orientation transversalement au sens de transport (T).

3. Machine de traitement de feuilles et dispositif de transport coopérant avec celle-ci selon la revendication 1, caractérisée en ce que le parcours de transport comporte des voies de guidage (rails de guidage 35, 35', 35''), orientées dans la sens de transport (T), juxtaposées, contre lesquelles sont guidées des surfaces de corps (36, 36') orientées opposées l'une à l'autre dans la sens de transport (T), d'une palette plate (6) respective.

4. Machine de traitement de feuilles et dispositif de transport coopérant avec celle-ci selon la revendication 1, caractérisée en ce que les moyens de transport comportent des corps de rotation (8) cylindriques, pourvus de boudins (11, 11'), les boudins (11, 11') coopérant avec des bords de corps, orientés opposés l'un à l'autre dans le sens de transport (T), d'une palette plate (6) respective.

5. Machine de traitement de feuilles et dispositif de transport coopérant avec celle-ci selon la revendication 1, caractérisée en ce que
- une palette plate (6) respective est en prise avec les premiers éléments de guidage (11, 35, 37), contre un côté de la palette plate (6), sur lequel une face latérale (26) de la palette plate (6) est sensiblement alignée avec une face latérale (25), orientée dans la sens de circulation (D), d'une pile de feuilles (7), empilée sur la palette plate (6), et
- les premiers éléments de guidage (11, 35, 37) présentent une position indépendante du format des feuilles formant la pile (7).

6. Machine de traitement de feuilles et dispositif de transport coopérant avec celle-ci selon la revendication 5, caractérisée en ce que les seconds éléments de guidage (11', 35', 35'', 37') sont prévus plusieurs fois à des distances, par rapport aux premiers éléments de guidage (11, 35, 37), dépendant du format des feuilles à traiter dans chaque cas.

7. Machine de traitement de feuilles et dispositif de transport coopérant avec celle-ci selon la revendication 5, caractérisée en ce que les seconds éléments de guidage (11', 35', 35'', 37'), sont prévus une fois et sont réglables au format des feuilles à traiter dans chaque cas.

8. Machine de traitement de feuilles et dispositif de transport coopérant avec celle-ci selon la revendication 5, caractérisée en ce que les premiers et les seconds éléments de guidage (11, 11' ; 35, 35', 37, 37', 37''), sont en prise avec la palette plate (6), sur un grand côté d'un longeron (12), prévu sur une palette plate (6), en vue de son support sur le parcours de transport.

9. Machine de traitement de feuilles et dispositif de transport coopérant avec celle-ci selon la revendication 1, caractérisée en ce qu'un palette plate (6), positionnée sur le dispositif de support (5') du margeur (1), avec pile de feuilles (7) empilée sur celle-ci, peut être ajustée, de manière à respecter le registre latéral, à l'aide des premiers moyens de transport, associés au margeur (1), au moyen d'un dispositif d'entraînement (17, 18, 19) entraînant ces premiers moyens de transport et d'un dispositif à capteur localisant un bord, orienté dans le sens de circulation (D), d'une feuille à traiter, et commandant le dispositif d'entraînement (17, 18, 19).

10. Machine de traitement de feuilles et dispositif de transport coopérant avec celle-ci selon la revendication 1, caractérisée par une configuration des moyens de guidage forcés et au moins des premiers moyens de transport telle qu'une extrémité, dirigée dans le sens de circulation (D), d'une palette plate (6) placée sur les premiers moyens de transport et guidée en droite ligne par les moyens de guidage forcés, dépasse des moyens de guidage forcés et des premiers moyens de transport dans le sens de circulation (D).
